# EUROPÄISCHE PATENTSCHRIFT

(11) **EP 2 334 521 B1**
(45) Veröffentlichungstag und Bekanntmachung des Hinweises auf die Patenterteilung: **05.09.2012**
(21) Anmeldenummer: 09748056.0
(22) Anmeldetag: 02.10.2009
(51) Int. Cl.: B60R 21/264

(54) **GASGENERATORBAUGRUPPE FÜR EIN KRAFTFAHRZEUG**
GAS GENERATOR ASSEMBLY FOR A MOTOR VEHICLE
MODULE GÉNÉRATEUR DE GAZ POUR UN VÉHICULE AUTOMOBILE

(30) Priorität: 17.10.2008 DE 102008052481
(43) Veröffentlichungstag der Anmeldung: 22.06.2011
(73) Patentinhaber: Takata AG, 63743 Aschaffenburg (DE)
(72) Erfinder: VON BREITENBACH, Gerrit, 63791 Karlstein (DE); WINDHAUSEN, Björn, 75328 Schömberg (DE)
(74) Vertreter: Müller, Wolfram Hubertus
(86) Internationale Anmeldenummer: PCT/EP2009/062831
(87) Internationale Veröffentlichungsnummer: WO 2010/043507

(56) Entgegenhaltungen:
- EP-A- 0 995 643
- WO-A-2007/141335
- DE-A1- 19 913 145
- DE-A1-102006 010 953
- JP-A- 4 006 192

## Beschreibung

Die Erfindung betrifft eine Gasgeneratorbaugruppe gemäß dem Oberbegriff des Anspruchs 1.

Eine gattungsgemäße Gasgeneratorbaugruppe ist aus der DE 199 13 145 A1 bekannt. Eine solche Gasgeneratorbaugruppe für ein Kraftfahrzeug weist einen Gasgenerator auf, der dazu eingerichtet und vorgesehen ist, nach einem Aktivieren des Gasgenerators Gas zum Aufblasen eines Gassackes des Kraftfahrzeuges bereitzustellen, wobei eine solche Baugruppe des Weiteren einen Filter zum Filtern der durch den Gasgenerator bereitgestellten Gase sowie eine separate Vorrichtung aufweist, die dazu eingerichtet und vorgesehen ist, eine Flüssigkeit frei zu setzen, so dass jene Flüssigkeit in den Filter eingespritzt wird.

Der Erfindung liegt das Problem zugrunde, eine Gasgeneratorbaugruppe der eingangs genannten Art im Hinblick auf ihr Aufblasverhalten variabler zu gestalten.

Dieses Problem wird durch eine Gasgeneratorbaugruppe mit den Merkmalen des Anspruchs 1 gelöst.

Danach ist vorgesehen, dass die besagte Vorrichtung dazu eingerichtet und vorgesehen ist, die Flüssigkeit zu einem vordefinierbaren Zeitpunkt freizusetzen, der unabhängig vom Zeitpunkt der Aktivierung des Gasgenerators ist.

Hierdurch kann zu einem beliebigen Zeitpunkt eine Flüssigkeitseinspritzung in den besagten Filter erfolgen. Insbesondere kann über den Zeitpunkt der Flüssigkeitseinspritzung in den Filter das Aufblasverhalten des Gasgenerators gezielt gesteuert werden. Erfolgt das Freisetzen der Flüssigkeit während bzw. nach einem Bereitstellen bzw. (pyrotechnischen) Erzeugen einer zum Aufblasen eines Gassackes benötigten Gasmenge, so kann die im Filter gespeicherte Energie - der Filter erwärmt sich aufgrund der durch den Filter durchströmenden heißen Gase des Gasgenerators - zur Erzeugung eines zusätzlichen Gasvolumens verwendet werden; denn die in den Filter eingespritzte Flüssigkeit verdampft aufgrund der im Filter gespeicherten Wärmeenergie und stellt ein zusätzliches Gasvolumen zur Verfügung.

Des Weiteren kann das Einspritzen der Flüssigkeit in den Filter während der Aktivierung des Gasgenerators auch zur aktiven Kühlung des Filters und gleichzeitig zur Kühlung der durch den Gasgenerator bereitgestellten Gase erfolgen.

Ferner besteht die Möglichkeit, den Filter maximal mittels der Flüssigkeit zu benetzen, indem die Flüssigkeit so durch die besagte Vorrichtung frei gesetzt wird, dass sie vor der Aktivierung des Gasgenerators mit dem Filter in Berührung kommt.

Weiterhin erlaubt das Benetzen des Filters mit der Flüssigkeit ein Binden von Stäuben und Partikeln und stellt zudem eine zusätzliche Kühlung des Gasgeneratorgehäuses bereit.

Durch die erfindungsgemäße Lösung können kleinere Filter verwendet werden, sowie die notwendige Gassatzmenge (Treibstoffmenge), durch deren Verbrennen das durch den Gasgenerator bereitgestellte Gas bevorzugt erzeugt wird, reduziert werden, indem die nach dem Bereitstellen des Gases im Filter gespeicherten Wärme zur Erzeugung eines zusätzlichen Gasvolumens genutzt wird. Dies stellt eine erweiterte Variabilität der Gasgeneratorleistung im Vergleich zu herkömmlichen Gasgeneratoren zur Verfügung. Durch die Flüssigkeitseinspritzung in den Filter wird weiterhin der Gasgenerator gekühlt, so dass ein Verbau von günstigen Kunststoffteilen ebenfalls möglich ist.

Bevorzugt weist die besagte Vorrichtung eine Bewegungserzeugungsvorrichtung auf, die dazu eingerichtet und vorgesehen ist, mit der in der Vorrichtung gespeicherten Flüssigkeit zusammen zu wirken, um jene Flüssigkeit zu dem vorbestimmbaren Zeitpunkt freizusetzen, so dass jene Flüssigkeit in Kontakt mit dem Filter gelangt bzw. in den Filter eingespritzt wird.

Dabei ist die Bewegungserzeugungsvorrichtung bevorzugt dazu ausgebildet, jene Flüssigkeit mit einem Druck zu beaufschlagen, um die Flüssigkeit freizusetzen.

Zum Speichern der besagten Flüssigkeit weist die Vorrichtung eine Kammer auf, an der bevorzugt die Bewegungserzeugungsvorrichtung angeordnet ist. Somit kann die Bewegungserzeugungsvorrichtung, die insbesondere den Druck zum Beaufschlagen der in der Kammer gespeicherten Flüssigkeit pyrotechnisch bereitstellt (Gasgenerator), die in der Kammer gespeicherte Flüssigkeit zum Freisetzen der Flüssigkeit mit dem besagten Druck beaufschlagen. Dies kann über ein Element in Form eines Kolbens, einer flexiblen Membran oder über ein sonstiges Dichtelement zum Abdichten der Kammer gegenüber der Bewegungserzeugungsvorrichtung geschehen, das zwischen der Bewegungserzeugungsvorrichtung und der in der Kammer angeordneten Flüssigkeit angeordnet ist. Durch den mittels der Bewegungserzeugungsvorrichtung bereitgestellten Druck wird jenes Element aus einer Anfangsposition in eine Endposition gedrückt, wobei das besagte Element die Flüssigkeit mitnimmt und aus der Kammer herausdrückt. Das besagte Element kann durch den Druck auch zerstört werden oder durch die Bewegungserzeugungsvorrichtung verbrannt werden, so dass der Druck die Flüssigkeit unmittelbar beaufschlagt.

Vorzugsweise weist der Gasgenerator ein Gehäuse auf, das zumindest den Filter und eine gaserzeugende Substanz (Treibstoff), die zum Erzeugen des durch den Gasgenerator bereitzustellenden Gases mittels eines Zünders gezündet werden kann. Das Gehäuse des Gasgenerators definiert einen Innenraum des Gasgenerators bzw. des Gehäuses, in dem die besagten Komponenten angeordnet sind.

Bevorzugt ist die Kammer zum Speichern der in den Filter einzuspritzenden Flüssigkeit außerhalb des Innenraumes des Gehäuses des Gasgenerators angeordnet. Dabei ist die Kammer der Vorrichtung bevorzugt über eine Leitungsverbindung mit dem Innenraum des Gehäuses verbunden, so dass die in der Kammer gespeicherte Flüssigkeit aus der Kammer über jene Leitungsverbindung in den Innenraum des Gehäuses des Gasgenerators gelangen kann. Zum Benetzen des Filters weist jene Leitungsverbindung zumindest eine im Innenraum des Gehäuses angeordnete Öffnung auf, durch die hindurch die in der Kammer gespeicherte Flüssigkeit aus der Leitungsverbindung austreten kann, so dass die Flüssigkeit mit dem Filter in Kontakt gelangt. Alternativ hierzu kann die Kammer sowie die gesamte Vorrichtung zur Einspritzung der Flüssigkeit auch in dem besagten Gehäuse des Gasgenerators, d. h., im Innenraum des Gehäuses angeordnet sein. Zum Ausströmen der durch den Gasgenerator pyrotechnisch erzeugten Gase weist das Gehäuse des Gasgenerators zumindest eine Ausströmöffnung auf, durch die hindurch im Innenraum des Gehäuses des Gasgenerators bereitgestellte Gase (beispielsweise durch Verbrennen einer Gas erzeugenden Substanz) aus dem Innenraum in einen den Gasgenerator umgebenden Außenraum entweichen können.

Zum Aufblasen eines Gassackes eines Kraftfahrzeugairbagmoduls ist der besagte Gasgenerator dabei vorzugsweise in einem durch den Gassack definierten Innenraum des Gassackes angeordnet oder es sind Strömungsverbindungen vorgesehen, die mindestens eine Ausströmöffnung des Gasgenerators mit einer Einströmöffnung des Gassackes bzw. dem Innenraum des Gassackes verbinden.

Das durch den Gasgenerator im Innenraum des Gehäuses des Gasgenerators bereitgestellte Gas strömt vorzugsweise entlang einer zur mindestens einen Ausströmöffnung weisenden Gasstromrichtung über eine im Innenraum des Gehäuses angeordnete Strömungsverbindung zur mindestens einen Ausströmöffnung des Gehäuses, wobei vorzugsweise der im Innenraum des Gehäuses angeordnete Filter in der Gasstromrichtung vor der mindestens einen Ausströmöffnung angeordnet ist.

Somit muss das durch den Gasgenerator erzeugte Gas zunächst den Filter passieren, bevor es aus der mindestens einen Ausströmöffnung des Gasgenerators ausströmen kann.

Vorzugsweise ist die Öffnung der Leitungsverbindung der Vorrichtung zur Einspritzung der Flüssigkeit entlang jener Gasströmrichtung vor dem Filter angeordnet, d. h., der Filter ist entlang der Strömungsverbindung zwischen der mindestens einen Ausströmöffnung und der Öffnung der Leitungsverbindung angeordnet (die Leitungsverbindung kann natürlich auch eine Mehrzahl von Öffnungen aufweisen).

Es besteht natürlich auch die Möglichkeit, die besagte Öffnung der Leitungsverbindung im Filter selbst vorzusehen, so dass der Filter die Öffnung der Leitungsverbindung umgibt bzw. um jene Öffnung herum angeordnet ist. Auf diese Weise kann die Flüssigkeit direkt in den Filter eingespritzt werden.

Ferner ist in einer alternativen Variante die Öffnung entlang der Gasstromrichtung an einem Ende des Filters angeordnet, das entlang der Gastromrichtung der Ausströmöffnung gegenüberliegen kann. Oder anders gesagt, die Öffnung ist entlang der Gasstromrichtung zwischen dem Filter und der Ausströmöffnung angeordnet. Hierbei ist die Öffnung vorzugsweise der Gasstromrichtung entgegengesetzt angeordnet, d.h., die Öffnung ist dem Gasstrom zugewandt. Auf diese Weise wird eine Gegenstromanordnung der Öffnung der Leitungsverbindung bereitgestellt (so dass Gas prinzipiell durch die Öffnung in die Leitungsverbindung einströmen könnte, jedoch durch den Druck der ausströmenden Flüssigkeit davon abgehalten wird). Des Weiteren kann im Bereich der Leitungsverbindung eine öffenbare (zerstörbare) Membran vorgesehen sein, die verhindert, dass Flüssigkeit unkontrolliert aus der Leitungsverbindung austritt und / oder Gas unkontrolliert in die Leitungsverbindung oder die Kammer eindringt.

Zum Ansteuern der Bewegungserzeugungsvorrichtung, die dazu dient die Flüssigkeit zu einem beliebigen Zeitpunkt freizusetzen, weist die besagte Vorrichtung zum Freisetzen der Flüssigkeit vorzugsweise eine Steuerelektronik auf, die die besagte Bewegungserzeugungsvorrichtung ansteuert.

Dabei ist jene Steuerelektronik bevorzugt dazu eingerichtet und vorgesehen, die Bewegungserzeugungsvorrichtung zum Bereitstellen des Druckes, mit dem die Flüssigkeit zum Freisetzen beaufschlagt wird, in Abhängigkeit zumindest eines Parameters, der durch einen im oder am Kraftfahrzeug angeordneten Sensor erfassbar ist, auszulösen. Bei einem solchen Parameter kann es sich insbesondere um ein Insassengewicht, eine Körpergröße des Insassen, eine Position des Insassen im Innenraum des Kraftfahrzeuges bezüglich des aufzublasenden Gassackes oder einen sonstigen kraftfahrzeugbezogenen Parameter handeln.

Besonders bevorzugt ist die Steuerelektronik dazu eingerichtet und vorgesehen, die Bewegungserzeugungsvorrichtung auszulösen, während der Gasgenerator Gas zum Aufblasen eines Gassackes bereitstellt oder nach dem der Gasgenerator Gas zum Aufblasen des Gassackes bereitgestellt hat. D.h., die Bewegungserzeugungsvorrichtung wird ausgelöst, während der Treibstoff des Gasgenerators zu Gas umgesetzt (verbrannt) wird bzw. nachdem der Treibstoff des Gasgenerators vollständig umgesetzt (verbrannt) wurde.

Des Weiteren ist die Steuerelektronik besonders bevorzugt dazu eingerichtet und vorgesehen, die Bewegungserzeugungsvorrichtung auszulösen, bevor der Gasgenerator Gas zum Aufblasen eines Gassackes bereitstellt, d.h., bevor der Treibstoff des Gasgenerators gezündet wird.

Die dargestellten Merkmale und Vorteile der Erfindung sollen anhand der nachfolgenden Figurenbeschreibung eines Ausführungsbeispiels verdeutlicht werden. Es zeigt:

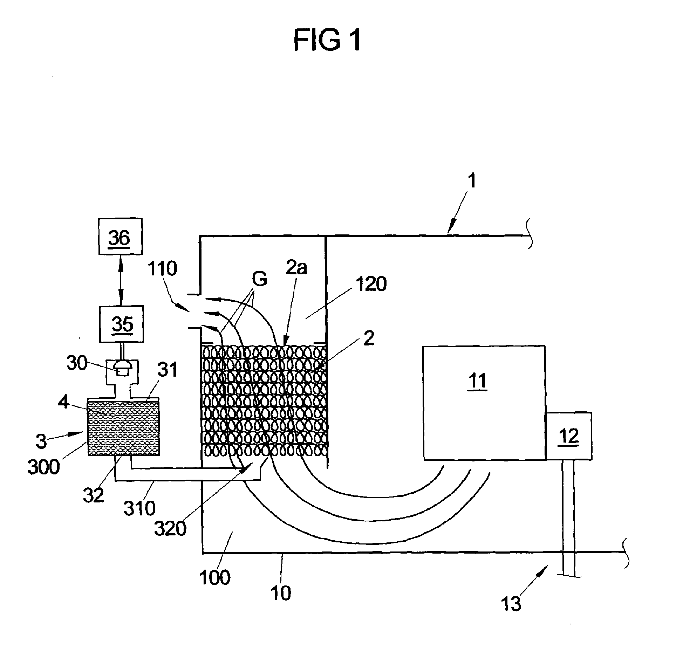

- Figur 1:: eine schematische Schnittansicht einer erfindungemäßen Gasgeneratorbaugruppe.

Figur 1 zeigt anhand einer schematischen, ausschnitthaften Schnittdarstellung eine erfindungsgemäße Gasgeneratorbaugruppe, mit einem Gasgenerator 1, der ein Gehäuse 10 aufweist, das einen Innenraum 100 des Gasgenerators 1 definiert.

In jenem Innenraum 100 ist ein Treibstoff 11 (Gassatz) angeordnet, der mittels eines Zünders 12, der ebenfalls im besagten Innenraum 100 angeordnet ist und gegebenenfalls eine Verstärkerladung beinhaltet, anzündbar ist. Wird jener Treibstoff 11 durch den Zünder 12 gezündet, entsteht durch Verbrennung des Treibstoffes 11 ein Gas, das zum Aufblasen eines Gassackes eines Kraftfahrzeugairbagmoduls verwendet werden kann. Zum Aktivieren des Zünders 12 ist eine elektrische Leitungsverbindung 13 vorgesehen, die zum Auslösen des Zünders 12 mit einer fahrzeugseitigen Elektronik verbunden sein kann. Vom Treibstoff 11 erstreckt sich entlang einer Gasstromrichtung G eine Strömungsverbindung 120 entlang der das durch den Gasgenerator 1 im Innenraum 100 bereitgestellte Gas zu einer am Gehäuse 10 des Gasgenerators 1 vorgesehenen Ausströmöffnung 110 strömen kann.

Entlang dieser Strömungsverbindung 120 ist zwischen dem Treibstoff 11 und der Ausströmöffnung 110 ein Filter 2 angeordnet, der zum Filtern des durch den Gasgenerator 1 bereitgestellten Gases dient. Dabei kann der Filter 2 bei der pyrotechnischen Umsetzung des Treibstoffes 11 in Gas entstehende Partikel zurückhalten und des Weiteren das durch den Gasgenerator 1 bereitgestellte Gas kühlen. Vorzugsweise besteht der Filter 2 aus einem Metall.

Der Filter 2 ist also derart entlang der Strömungsverbindung 120 angeordnet, dass das durch den Gasgenerator 1 bereitgestellte Gas (Verbrennen des Treibstoffes 11) vorzugsweise lediglich über dem besagten Filter 2 zur Ausströmöffnung 110 gelangen kann.

Da das entlang der Gasströmrichtung G den Filter 2 passierende heiße Gas den Filter 2 aufheizt, kann durch Benetzen des Filters 2 mittels einer Flüssigkeit 4 die im Filter 2 gespeicherte Wärme zur Erzeugung eines weiteren Gasvolumens - durch Verdampfung der besagten Flüssigkeit 4 - verwendet werden. Des Weiteren besteht die Möglichkeit, durch Einspritzen einer Flüssigkeit 4 in den Filter 2 jenen Filter 2 sowie durch den Filter 2 hindurch strömende Gase zu kühlen.

Hierzu weist der Gasgenerator 1 eine separate Vorrichtung 3 auf, die gemäß Figur 1 vorzugsweise außerhalb des Innenraumes 100 des Gehäuses 10 des Gasgenerators 1 angeordnet ist. Jene Vorrichtung 3 kann aber auch in das Gehäuse 10 des Gasgenerators 1 integriert sein. Die Vorrichtung 3 weist eine Kammer 300 zum Speichern der besagten Flüssigkeit 4 auf, wobei zum Freisetzen jener Flüssigkeit 4 in den Filter 2 eine Bewegungserzeugungsvorrichtung 30 in Form eines Gasgenerators vorgesehen ist, der an jener Kammer 300 angeordnet ist. Die Bewegungserzeugungsvorrichtung 30 ist dabei dazu ausgebildet, die in der Kammer 300 angeordnete Flüssigkeit 4 über eine Membran 31 bzw. einen Kolben 31 oder ein sonstiges Element 31 mit einem Druck zu beaufschlagen, so dass die Flüssigkeit 4 über eine Leitungsverbindung 310, die die Kammer 300 und den Innenraum 100 des Gehäuses 10 flüssigkeitsleitend verbindet, in den Innenraum 100 des Gehäuses 10 gelangen kann. Damit die Flüssigkeit 4 nach einem Beaufschlagen mit einem durch die Bewegungserzeugungsvorrichtung 30 bereitgestellten Druck möglichst schnell den Filter 2 benetzen kann, weist die Leitungsverbindung 310 eine Öffnung 320 auf, die entlang der Gasstromrichtung G vor dem Filter 2 angeordnet ist. D.h., der Filter 2 ist entlang der Gasstromrichtung G zwischen jener Öffnung 320 der Leitungsverbindung 310 und der Ausströmöffnung 110 des Gehäuses 10 angeordnet. Eine Membran 32 verhindert den unbeabsichtigten Einfluss der Flüssigkeit 4 in den Innenraum 100 durch die Öffnung 320.

Die Bewegungserzeugungsvorrichtung 30 ist mit einer Steuerelektronik 35 gekoppelt, über die die Bewegungserzeugungsvorrichtung 30 angesteuert werden kann. Zum Auslösen der Bewegungserzeugungsvorrichtung 30 derart, dass die Bewegungserzeugungsvorrichtung 30 den zum Freisetzen der Flüssigkeit 4 benötigten Druck bereitstellt, erzeugt die Steuerelektronik 35 ein entsprechendes Auslösesignal, das die Steuerelektronik 35 in Abhängigkeit zumindest eines durch einen Sensor 36 erfassbaren Parameters vorsieht. Ein solcher Sensor 36 ist entsprechend mit der Steuerelektronik 35 gekoppelt. Insbesondere kann die Bewegungserzeugungsvorrichtung 30 derart durch die Steuerelektronik 35 angesteuert werden, dass die Flüssigkeit 4 zu einem beliebigen Zeitpunkt, insbesondere unabhängig vom Aktivieren des Zünders 12 des Gasgenerators 1, in den Innenraum 100, und zwar in den Filter 2, freigesetzt werden kann.

Die erfindungsgemäße Lösung zeichnet sich somit insbesondere durch den aktiv steuerbaren Zeitpunkt der Flüssigkeitseinspritzung in den Filter 2 aus. Hierbei wird bevorzugt die in der Kammer 300 gespeicherte Flüssigkeit 4 durch einen üblichen Anzünder (Bewegungserzeugungsvorrichtung 30) direkt in den Filter 2 entladen.

## Patentansprüche

1. Gasgeneratorbaugruppe für ein Kraftfahrzeug, mit
- einem Gasgenerator (1), der dazu ausgebildet ist, nach einem Aktivieren des Gasgenerators (1) Gas zum Aufblasen eines Gassackes bereitzustellen,
- einem Filter (2) zum Filtern durch den Gasgenerator (1) bereitgestellter Gase, und
- einer Vorrichtung (3), die dazu ausgebildet ist, eine Flüssigkeit (4) freizusetzen, so dass jene Flüssigkeit (4) in Kontakt mit dem Filter (2) gelangt,
**dadurch gekennzeichnet,**
**dass** die Vorrichtung (3) dazu ausgebildet ist, die Flüssigkeit zu einem vorbestimmbaren Zeitpunkt freizusetzen, der unabhängig vom Zeitpunkt der Aktivierung des Gasgenerators (1) ist.

2. Gasgeneratorbaugruppe nach Anspruch 1, **dadurch gekennzeichnet, dass** die Vorrichtung (3) eine Bewegungserzeugungsvorrichtung (30) aufweist, die dazu ausgebildet ist, mit der Flüssigkeit (4) zusammenzuwirken, um die Flüssigkeit zu dem vorbestimmbaren Zeitpunkt freizusetzen.

3. Gasgeneratorbaugruppe nach Anspruch 2, **dadurch gekennzeichnet, dass** die Bewegungserzeugungsvorrichtung (30) dazu ausgebildet ist, die Flüssigkeit (4) mit einem Druck zu beaufschlagen, um die Flüssigkeit (4) freizusetzen, wobei die Bewegungserzeugungsvorrichtung (30) dazu ausgebildet ist, den besagten Druck pyrotechnisch bereitzustellen.

4. Gasgeneratorbaugruppe nach einem der vorhergehenden Ansprüche, **dadurch gekennzeichnet, dass** die Vorrichtung (3) eine Kammer (300) zum Speichern der Flüssigkeit (4) aufweist.

5. Gasgeneratorbaugruppe nach einem der vorhergehenden Ansprüche, **gekennzeichnet durch** ein Gehäuse (10) des Gasgenerators (1) zur Aufnahme zumindest des Filters (2) und einer Gas erzeugenden Substanz (11) zum pyrotechnischen Erzeugen des **durch** den Gasgenerator (1) bereitzustellenden Gases, wobei das Gehäuse (10) einen Innenraum (100) definiert.

6. Gasgeneratorbaugruppe nach den Ansprüchen 4 und 5, **dadurch gekennzeichnet, dass** die Kammer (300) außerhalb des Innenraumes (100) des Gehäuses (10) angeordnet ist.

7. Gasgeneratorbaugruppe nach den Ansprüchen 4 und 5, **dadurch gekennzeichnet, dass** die Kammer (300) im Innenraum (100) des Gehäuses (10) angeordnet ist.

8. Gasgeneratorbaugruppe nach Anspruch 6 oder 7, **dadurch gekennzeichnet, dass** die Kammer (300) der Vorrichtung (3) über eine Leitungsverbindung (310) mit dem Innenraum (100) des Gehäuses (10) verbunden ist, so dass die Flüssigkeit (4) aus der Kammer (300) über die Leitungsverbindung (310) in den Innenraum (100) gelangen kann, wobei die Leitungsverbindung (310) eine im Innenraum (100) des Gehäuses (10) angeordnete Öffnung (320) aufweist, durch die hindurch die Flüssigkeit (4) aus der Leitungsverbindung (310) austreten kann.

9. Gasgeneratorbaugruppe nach Anspruch 5 oder einem der Ansprüche 6 bis 8 soweit rückbezogen auf Anspruch 5, **dadurch gekennzeichnet, dass** das Gehäuse (10) zumindest eine Ausströmöffnung (110) zum Ausströmen durch den Gasgenerator (1) bereitgestellter Gase aufweist, wobei durch den Gasgenerator (1) im Innenraum (100) des Gehäuses (10) bereitgestelltes Gas entlang einer zur mindestens einen Ausströmöffnung (110) weisenden Gasstromrichtung (G) über eine Strömungsverbindung (120) zur Ausströmöffnung (110) des Gehäuses (10) geleitet wird.

10. Gasgeneratorbaugruppe nach Anspruch 9, **dadurch gekennzeichnet, dass** der Filter (2) bezogen auf die Gasstromrichtung (G) vor der mindestens einen Ausströmöffnung (110) angeordnet ist.

11. Gasgeneratorbaugruppe nach Anspruch 8 und nach Anspruch 9 oder 10, **dadurch gekennzeichnet, dass** die Öffnung (320) entlang der Gasstromrichtung (G) im Filter (2) angeordnet ist.

12. Gasgeneratorbaugruppe nach Anspruch 8 und nach Anspruch 9 oder 10, **dadurch gekennzeichnet, dass** die Öffnung (320) entlang der Gasstromrichtung (G) an einem Ende (2a) des Filters (2) angeordnet ist.

13. Gasgeneratorbaugruppe nach einem der vorhergehenden Ansprüche, **dadurch gekennzeichnet, dass** zum Ansteuern der Bewegungserzeugungsvorrichtung (30) eine Steuerelektronik (35) vorgesehen ist.

14. Gasgeneratorbaugruppe nach Anspruch 3 und nach Anspruch 13, **dadurch gekennzeichnet, dass** die Steuerelektronik (35) dazu ausgebildet ist, die Bewegungserzeugungsvorrichtung (30) zur Bereitstellung des Druckes in Abhängigkeit zumindest eines durch zumindest einen Sensor (36) erfassbaren Parameters auszulösen.

15. Gasgeneratorbaugruppe nach Anspruch 13 oder 14, **dadurch gekennzeichnet, dass** die Steuerelektronik (35) dazu ausgebildet ist, die Bewegungserzeugungsvorrichtung (30) auszulösen, bevor der Gasgenerator (1) Gas zum Aufblasen eines Gassackes bereitstellt, während der Gasgenerator (1) Gas zum Aufblasen eines Gassackes bereitstellt, oder nachdem der Gasgenerator (1) Gas zum Aufblasen des Gassackes bereitgestellt hat.

## Claims

1. Gas generator assembly for a motor vehicle with
- a gas generator (1) which is designed to provide gas to inflate an airbag after the gas generator (1) is activated,
- a filter (2) for filtering gases provided by the gas generator (1) and
- a device (3) which is designed to release a fluid (4) so that said fluid (4) comes into contact with the filter (2),
**characterized in that**
the device (3) is designed to release the fluid at a point in time which can be pre-defined, and which is independent from the point of time of the activation of the gas generator (1).

2. Gas generator assembly according to claim 1, **characterized in that** the device (3) comprises a device (30) for generating a movement which is designed to interact with the fluid (4) for releasing the fluid at the point of time which can be pre-defined.

3. Gas generator assembly according to claim 2, **characterized in that** the device for generating a movement (30) is designed for charging the fluid (4) with a pressure for releasing the fluid (4), wherein the device (30) for generating a movement is designed for providing said pressure pyrotechnically.

4. Gas generator assembly according to one of the preceding claims, **characterized in that** the device (3) comprises a chamber (300) for storing the fluid (4).

5. Gas generator assembly according to one of the preceding claims, **characterized by** a housing (10) of the gas generator (1) for receiving at least the filter (2) and a substance (11) for generating a gas for pyrotechnically producing the gas provided by the gas generator (1), whereby the housing (10) defines an interior space (100).

6. Gas generator assembly according to the claims 4 and 5, **characterized in that** the chamber (300) is arranged outside of the interior space (100) of the housing (10).

7. Gas generator assembly according to the claims 4 and 5, **characterized in that** the chamber (300) is arranged in the interior space (100) of the housing (10).

8. Gas generator assembly according to claims 6 or 7, **characterized in that** the chamber (300) of the device (3) is connected via a connection line (310) with the interior space (100) of the housing (10) so that the fluid (4) can get from the chamber (300) via the connection line (310) into the interior space (100), wherein the connection line (310) comprises an opening (320) arranged in the interior space (100) of the housing (10) through which the fluid (4) can leave the connection line (310).

9. Gas generator assembly according to claim 5 or one of the claims 6 to 8 if dependent on claim 5, **characterized in that** the housing (10) comprises at least one outflow opening (110) for emitting gases provided by the gas generator (1), wherein gas provided by the gas generator (1) in the interior space (100) of the housing (10) is guided along a gas flow direction (G) pointing to at least one outflow opening (110) via a connection line (120) to the outflow opening (110) of the housing (10).

10. Gas generator assembly according to claim 9, **characterized in that** the filter (2) is arranged in front of the at least one front opening (110) in respect to the gas flow direction (G).

11. Gas generator assembly according to claim 8 and to claim 9 or 10, **characterized in that** the opening (320) is arranged along the gas flow direction (G) in the filter (2).

12. Gas generator assembly according to claim 8 and to claims 9 or 10, **characterized in that** the opening (320) is arranged along the gas flow direction (G) on one end (2a) of the filter (2).

13. Gas generator assembly according to one of the preceding claims, **characterized in that** a control electronics (35) is provided for controlling the device for generating a movement (30).

14. Gas generator assembly according to claim 3 and to claim 13, **characterized in that** the control electronics (35) is designed for triggering the device for generating a movement (30) for providing the pressure in dependency on at least one parameter detectable by at least one sensor (36).

15. Gas generator assembly according to claims 13 or 14, **characterized in that** the control electronics (35) is designed for triggering the device for generating a movement (30), before the gas generator (1) provides gas for inflating an airbag, while the gas generator (1) provides gas for inflating an airbag or after the gas generator (1) has provided gas for inflating the airbag.

## Revendications

1. Module générateur de gaz pour un véhicule automobile, comprenant
- un générateur de gaz (1) réalisé afin de mettre à disposition, après une activation du générateur de gaz (1), du gaz pour le gonflage d'un sac à gaz,
- un filtre (2) pour la filtration de gaz mis à disposition par le générateur de gaz, et
- un dispositif (3) réalisé afin de libérer un liquide (4) de sorte que ce liquide (4) vienne en contact avec le filtre (2),
**caractérisé en ce**
**que** le dispositif (3) est réalisé afin de libérer le liquide à un moment pouvant être prédéterminé qui ne dépend pas du moment de l'activation du générateur de gaz (1).

2. Module générateur de gaz selon la revendication 1, **caractérisé en ce que** le dispositif (3) présente un dispositif de génération de mouvement (30) réalisé afin de coopérer avec le liquide (4) dans le but de libérer le liquide au moment pouvant être prédéterminé.

3. Module générateur de gaz selon la revendication 2, **caractérisé en ce que** le dispositif de génération de mouvement (30) est réalisé afin de mettre le liquide (4) sous pression dans le but de libérer le liquide (4), sachant que le dispositif de génération de mouvement (30) est réalisé afin de mettre à disposition de manière pyrotechnique ladite pression.

4. Module générateur de gaz selon l'une quelconque des revendications précédentes, **caractérisé en ce que** le dispositif (3) présente une chambre (300) pour l'accumulation du liquide (4).

5. Module générateur de gaz selon l'une quelconque des revendications précédentes, **caractérisé par** un boîtier (10) du générateur de gaz (1) destiné à loger au moins un filtre (2) et une substance (11) générant du gaz pour la génération pyrotechnique du gaz devant être mis à disposition par le générateur de gaz (1), sachant que le boîtier (10) définit un espace intérieur (100).

6. Module générateur de gaz selon les revendications 4 et 5, **caractérisé en ce que** la chambre (300) est disposée en dehors de l'espace intérieur (100) du boîtier (10).

7. Module générateur de gaz selon les revendications 4 et 5, **caractérisé en ce que** la chambre (300) est disposée dans l'espace intérieur (100) du boîtier (10).

8. Module générateur de gaz selon la revendication 6 ou 7, **caractérisé en ce que** la chambre (300) du dispositif (3) est reliée par une connexion de raccordement (310) à l'espace intérieur (100) du boîtier (10) de sorte que le liquide (4) puisse venir de la chambre (300) par la connexion de raccordement (310) dans l'espace intérieur (100), sachant que la connexion de raccordement (310) présente une ouverture (320) disposée dans l'espace intérieur (100) du boîtier (10), par laquelle le liquide (4) peut sortir de la connexion de raccordement (310).

9. Module générateur de gaz selon la revendication 5 ou l'une quelconque des revendications 6 à 8, dans la mesure où elle dépend de la revendication 5, **caractérisé en ce que** le boîtier (10) présente au moins une ouverture d'échappement (110) pour l'échappement des gaz mis à disposition par le générateur de gaz (1), sachant que du gaz mis à disposition par le générateur de gaz (1) dans l'espace intérieur (100) du boîtier (10) est conduit le long d'un sens de flux de gaz (G) dirigé vers au moins une ouverture d'échappement (110) par une liaison d'écoulement (120) vers l'ouverture d'échappement (110) du boîtier (10).

10. Module générateur de gaz selon la revendication 9, **caractérisé en ce que** le filtre (2) est disposé par rapport au sens de flux de gaz (G) devant au moins une ouverture d'échappement (110).

11. Module générateur de gaz selon la revendication 8 et selon la revendication 9 ou 10, **caractérisé en ce que** l'ouverture (320) est disposée le long du sens de flux de gaz (G) dans le filtre (2).

12. Module générateur de gaz selon la revendication 8 et selon la revendication 9 ou 10, **caractérisé en ce que** l'ouverture (320) est disposée le long du sens de flux de gaz (G) sur une extrémité (2a) du filtre (2).

13. Module générateur de gaz selon l'une quelconque des revendications précédentes, **caractérisé en ce qu'**un dispositif électronique de commande (35) est prévu pour la commande du dispositif de génération de mouvement (30).

14. Module générateur de gaz selon la revendication 3 et selon la revendication 13, **caractérisé en ce que** le dispositif électronique de commande (35) est configuré afin de déclencher le dispositif de génération de mouvement (30) pour la mise à disposition de la pression en fonction d'au moins un paramètre détectable par au moins un capteur (36).

15. Module générateur de gaz selon la revendication 13 ou 14, **caractérisé en ce que** le dispositif électronique de commande (35) est configuré afin de déclencher le dispositif de génération de mouvement (30) avant que le générateur de gaz (1) ne mette à disposition du gaz pour le gonflage d'un sac à gaz, pendant que le générateur de gaz (1) met à disposition du gaz pour le gonflage d'un sac à gaz, ou après que le générateur de gaz (1) a mis à disposition du gaz pour le gonflage du sac à gaz.
